(19) Europäisches Patentamt
European Patent Office
Office européen des brevets

(11) **EP 4 238 199 B1**

(12) **EUROPÄISCHE PATENTSCHRIFT**

(45) Veröffentlichungstag und Bekanntmachung des Hinweises auf die Patenterteilung:
**15.04.2026 Patentblatt 2026/16**

(21) Anmeldenummer: **21815391.4**

(22) Anmeldetag: **12.11.2021**

(51) Internationale Patentklassifikation (IPC):
**H02H 3/093** (2006.01)    **H02H 3/50** (2006.01)
**H02H 3/20** (2006.01)    **H02H 3/24** (2006.01)

(52) Gemeinsame Patentklassifikation (CPC):
**H02H 3/50; H02H 3/093; H02H 3/20; H02H 3/24**

(86) Internationale Anmeldenummer:
**PCT/EP2021/081507**

(87) Internationale Veröffentlichungsnummer:
**WO 2022/135789 (30.06.2022 Gazette 2022/26)**

(54) **SCHUTZSCHALTGERÄT UND VERFAHREN**

CIRCUIT BREAKER DEVICE AND METHOD

DISPOSITIF ET PROCÉDÉ DE DISJONCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2020 DE 102020216413**

(43) Veröffentlichungstag der Anmeldung:
**06.09.2023 Patentblatt 2023/36**

(73) Patentinhaber: **Siemens Aktiengesellschaft**
**80333 München (DE)**

(72) Erfinder:
• **DÖBLER, Fabian**
**91741 Theilenhofen (DE)**
• **TANNHÄUSER, Marvin**
**91353 Hausen (DE)**
• **FROMME, Christopher**
**90763 Fürth (DE)**
• **MALANE, Dominic**
**85072 Eichstätt (DE)**

(74) Vertreter: **Siemens Patent Attorneys**
**Postfach 22 16 34**
**80506 München (DE)**

(56) Entgegenhaltungen:
EP-A2- 0 416 569    WO-A1-2014/084980
WO-A1-2015/028634    US-A- 4 694 402
US-A1- 2006 119 368    US-A1- 2018 217 187

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft das technische Gebiet eines Schutzschaltgerät für einen Niederspannungsstromkreis mit einer elektronischen Unterbrechungseinheit und ein Verfahren für ein Schutzschaltgerät für einen Niederspannungsstromkreis mit einer elektronischen Unterbrechungseinheit.

Mit Niederspannung sind Spannungen von bis zu 1000 Volt Wechselspannung oder bis zu 1500 Volt Gleichspannung gemeint. Mit Niederspannung sind insbesondere Spannungen gemeint, die größer als die Kleinspannung, mit Werten von 50 Volt Wechselspannung bzw. 120 Volt Gleichspannung, sind.

Mit Niederspannungsstromkreis bzw. -netz oder -anlage sind Stromkreise mit Nennströmen bzw. Bemessungsströmen von bis zu 125 Ampere, spezifischer bis zu 63 Ampere gemeint. Mit Niederspannungsstromkreis sind insbesondere Stromkreise mit Nennströmen bzw. Bemessungsströmen von bis zu 50 Ampere, 40 Ampere, 32 Ampere, 25 Ampere, 16 Ampere oder 10 Ampere gemeint. Mit den genannten Stromwerten sind insbesondere Nenn-, Bemessungs- oder/und Abschaltströme gemeint, d.h. der Strom der im Normalfall maximal über den Stromkreis geführt wird bzw. bei denen der elektrische Stromkreis üblicherweise unterbrochen wird, beispielsweise durch eine Schutzeinrichtung, wie ein Schutzschaltgerät, Leitungsschutzschalter oder Leistungsschalter.

Leitungsschutzschalter sind seit langem bekannte Überstromschutzeinrichtungen, die in der Elektroinstallationstechnik in Niederspannungsstromkreisen eingesetzt werden. Diese schützen Leitungen vor Beschädigung durch Erwärmung infolge zu hohen Stromes und/oder Kurzschluss. Ein Leitungsschutzschalter kann den Stromkreis bei Überlast und/oder Kurzschluss selbsttätig abschalten. Ein Leitungsschutzschalter ist ein nicht selbsttätig zurückstellendes Sicherungselement.

Leistungsschalter sind, im Gegensatz zu Leitungsschutzschaltern, für Ströme größer als 125 A vorgesehen, teilweise auch schon ab 63 Ampere. Leitungsschutzschalter sind deshalb einfacher und filigraner aufgebaut. Leitungsschutzschalter weisen üblicherweise eine Befestigungsmöglichkeit zur Befestigung auf einer so genannten Hutschiene (Tragschiene, DIN-Schiene, TH35) auf.

Leitungsschutzschalter sind elektromechanisch aufgebaut. In einem Gehäuse weisen sie einen mechanischen Schaltkontakt bzw. Arbeitsstromauslöser zur Unterbrechung (Auslösung) des elektrischen Stromes auf. Üblicherweise wird ein Bimetall-Schutzelement bzw. Bimetall-Element zur Auslösung (Unterbrechung) bei länger anhaltenden Überstrom (Überstromschutz) respektive bei thermischer Überlast (Überlastschutz) eingesetzt. Ein elektromagnetischer Auslöser mit einer Spule wird zur kurzzeitigen Auslösung bei Überschreiten eines Überstromgrenzwerts bzw. im Falle eines Kurzschlusses (Kurzschlussschutz) eingesetzt. Eine oder mehrere Lichtbogenlöschkam-mer(n) bzw. Einrichtungen zur Lichtbogenlöschung sind vorgesehen. Ferner Anschlusselemente für Leiter des zu schützenden elektrischen Stromkreises.

Schutzschaltgeräte mit einer elektronischen Unterbrechungseinheit sind relativ neuartige Entwicklungen. Diese weisen eine halbleiterbasierte elektronische Unterbrechungseinheit auf. D.h. der elektrische Stromfluss des Niederspannungsstromkreises wird über Halbleiterbauelemente respektive Halbleiterschalter geführt, die den elektrischen Stromfluss unterbrechen bzw. leitfähig geschaltet werden können. Schutzschaltgeräte mit einer elektronischen Unterbrechungseinheit weisen ferner häufig ein mechanisches Trennkontaktsystem auf, insbesondere mit Trennereigenschaften gemäß einschlägigem Normen für Niederspannungsstromkreise, wobei die Kontakte des mechanischen Trennkontaktsystems in Serie zur elektronischen Unterbrechungseinheit geschaltet sind, d.h. der Strom des zu schützenden Niederspannungsstromkreises wird sowohl über das mechanische Trennkontaktsystem als auch über die elektronische Unterbrechungseinheit geführt.

Bei halbleiterbasierten Schutzschaltgeräte bzw. Schutzgeräten, neudeutsch Solid State Circuit Breaker, kurz SSCB, muss die Schaltenergie nicht wie bei einem mechanischen Schaltgerät in einen Lichtbogen, sondern mittels eines zusätzlichen Schaltkreises, dem Energy Absorber, in Wärme umgesetzt werden. Die Abschaltenergie umfasst dabei die im Stromkreis, d.h. in den Netz-, Leitungs- bzw. Lastimpedanzen (Verbraucherimpedanzen), gespeicherte Energie. Um den Energy Absorber zu entlasten, muss der Strom, der im Moment des Abschaltens fließt, möglichst gering sein. Dies gilt auch im Falle eines Kurzschlusses. Hier steigt der Strom sehr schnell an. Durch schnelle Kurzschlusserkennung kann ein Kurzschluss frühzeitig erkannt und ein zu hoher Kurzschlussstrom vermieden werden. Das halbleiterbasierte Schutzschaltgerät unterbricht, im Sinne eines Abschaltvorganges, nahezu unverzögert, innerhalb von µs, den Stromkreis. Es treten keine hohen Ströme auf und die Belastung des Energy Absorbers eines halbleiterbasierten Schutzschaltgerätes wird reduziert. Bekannte Kurschlusserkennungen bzw. Abschaltkriterien basieren üblicherweise auf der Ermittlung und Auswertung des Strom-Istwertes.

Die vorliegende Erfindung bezieht sich auf Niederspannungswechselstromkreise, mit einer Wechselspannung, üblicherweise mit einer zeitabhängigen sinusförmigen Wechselspannung mit der Frequenz f, typischerweise 50 oder 60 Hertz (Hz). Die zeitliche Abhängigkeit des momentanen Spannungswertes u(t) der Wechselspannung ist durch die Gleichung:

$$u(t) = U * \sin (2\pi * f * t)$$

beschrieben. Wobei:

u(t) = momentaner Spannungswert zu der Zeit t
U = Amplitude (Maximalwert) der Spannung

Eine harmonische Wechselspannung lässt sich durch die Rotation eines Zeigers darstellen, dessen Länge der Amplitude (U) der Spannung entspricht. Die Momentanauslenkung ist dabei die Projektion des Zeigers auf ein Koordinatensystem. Eine Schwingungsperiode entspricht einer vollen Umdrehung des Zeigers und dessen Vollwinkel beträgt $2\pi$ (2Pi) bzw. 360°. Die Kreisfrequenz ist die Änderungsrate des Phasenwinkels dieses rotierenden Zeigers. Die Kreisfrequenz einer harmonischen Schwingung beträgt immer das $2\pi$-fache ihrer Frequenz, d.h.:

$$\omega = 2\pi * f = 2\pi/T = \text{Kreisfrequenz der Wechselspannung}$$

(T = Periodendauer der Schwingung)

Häufig wird die Angabe der Kreisfrequenz ($\omega$) gegenüber der Frequenz (f) bevorzugt, da sich viele Formeln der Schwingungslehre aufgrund des Auftretens trigonometrischer Funktionen, deren Periode per Definition $2\pi$ ist, mit Hilfe der Kreisfrequenz kompakter darstellen lassen:

$$u(t) = U * \sin(\omega t)$$

Im Falle zeitlich nicht konstanter Kreisfrequenzen wird auch der Begriff momentane Kreisfrequenz verwendet.

Bei einer sinusförmigen, insbesondere zeitlich konstanten, Wechselspannung entspricht der zeitabhängige Wert aus der Winkelgeschwindigkeit $\omega$ und der Zeit t dem zeitabhängigen Winkel $\varphi(t)$, der auch als Phasenwinkel $\varphi(t)$ bezeichnet wird. D.h. der Phasenwinkel $\varphi(t)$ durchläuft periodisch den Bereich 0...$2\pi$ bzw. 0°...360°. D.h. der Phasenwinkel nimmt periodisch einen Wert zwischen 0 und $2\pi$ bzw. 0° und 360° an ($\varphi = n*(0...2\pi)$ bzw. $\varphi = n*(0°..360°)$, wegen Periodizität; verkürzt: $\varphi = 0...2\pi$ bzw. $\varphi = 0°...360°$).

Mit momentanem Spannungswert u(t) ist folglich der momentane Wert der Spannung zum Zeitpunkt t, d.h. bei einer sinusförmigen (periodischen) Wechselspannung der Wert der Spannung zum Phasenwinkel $\varphi$ gemeint ($\varphi = 0...2\pi$ bzw. $\varphi = 0°...360°$, der jeweiligen Periode).

Beispielsweise offenbart die EP 0 416 569 A2 eine Netzstromüberwachung für unterbrechungsfreie Stromversorgungen, welche durch die adaptive Erzeugung einer Referenzwellenform erfolgt, mit der die aktuelle Wellenform verglichen wird. Die Referenzwellenform ändert sich relativ langsam, so dass eine moderate Änderung der Spannungswellenform, die auf einen Fehler hindeutet, erkannt wird, während sich die Referenz an systematische Verzerrungen der Stromleitung gegenüber einer reinen Sinuswelle, die nicht auf einen Ausfall der Stromleitung hindeuten, anpassen und anpassen kann, so dass ein unnötiges Umschalten der USV vermieden wird.

Des Weiteren offenbart die WO 2015/028634 A1 einen Wechselstrom-Leistungsschalter mit einer stromführenden Leitung zwischen einer stromführenden Anschlussklemme und einer stromführenden Lastanschlussklemme und einer neutralen Leitung zwischen einer neutralen Versorgungsanschlussklemme und einer neutralen Lastanschlussklemme zum Anschluss einer Wechselstromlast an eine Netzversorgung, mit einem ersten galvanischen Trennschalter und einem Bypass-Schalter in der stromführenden Leitung und einem zweiten galvanischen Trennschalter in der neutralen Leitung und einem parallel zum Bypass-Schalter geschalteten Halbleiterschaltelement, wobei der erste und der zweite galvanische Trennschalter, der Bypass-Schalter und das Halbleiterschaltelement unter Verwendung einer Verarbeitungseinheit gesteuert werden.

Ferner offenbart die WO 2014/084980 A1 ein Stromversorgungssystem, welches ein Benutzersystem mit einer Vielzahl von Geräten, die so konfiguriert sind, dass sie Strom von einer Stromversorgungsleitung empfangen umfasst. Ein Stromversorgungsmodul ist vorgesehen, das so konfiguriert ist, dass es den von der Stromversorgungsleitung an das Benutzersystem gelieferten Strom analysiert, wobei das Stromversorgungsmodul ferner so konfiguriert ist, dass es eine oder mehrere Einheiten aktueller Wellenformdaten, die dem gelieferten Strom entsprechen, misst und die eine oder mehreren Einheiten aktueller Wellenformdaten mit einer oder mehreren Einheiten anomaler Wellenformdaten vergleicht.

Aufgabe der vorliegenden Erfindung ist es, ein Schutzschaltgerät eingangs genannter Art zu verbessern, insbesondere eine schnelle und alternative Möglichkeit zur Kurzschlusserkennung aufzuzeigen und eine sichere Unterbrechung zu gewährleisten.

Diese Aufgabe wird durch ein Schutzschaltgeräte mit den Merkmalen des Patentanspruchs 1, sowie durch ein Verfahren gemäß Patentanspruch 15 gelöst.

Erfindungsgemäß ist ein Schutzschaltgerät zum Schutz eines elektrischen Niederspannungsstromkreises, insbesondere Niederspannungswechselstromkreises, vorgesehen, aufweisend:

- einen Spannungssensor, zur Ermittlung der Höhe der Spannung des Niederspannungsstromkreises, derart das momentane/phasenwinkelbezogene Spannungswerte vorliegen,
- einer elektronischen Unterbrechungseinheit, die durch halbleiterbasierte Schaltelemente einen hochohmigen Zustand der Schaltelemente zur Unterbrechung und einen niederohmigen Zustand der Schaltelemente zum Stromfluss im Niederspannungsstromkreis aufweist,
- einer Steuerungseinheit, die mit dem Spannungssensor und der Unterbrechungseinheit verbunden ist, Erfindungsgemäß ist das Schutzschaltgerät derart ausgestaltet, dass momentane Schwellwerte vorliegen, d.h. dass für jeden Phasenwinkel bzw. einen Phasenwinkelbereich (mehrere Phasenwinkel) oder einen Phasenwinkelabschnitt (ein Teil eines Phasenwinkels) momentane Schwellwerte, d.h. phasenwinkelbezogene Schwellwerte, vorliegen. Die durch den Spannungssensor ermittelten momentanen Spannungswerte werden mit den momentanen Schwellwerten phasenwinkelbezogen verglichen, d.h. ein Schwellwert für einen Phasenwinkel wird mit dem Spannungswert für den gleichen Phasenwinkel der Spannung verglichen.

Je nach Art des Vergleichs wird bei Überschreitung oder Unterschreitung der momentanen Schwellwerte eine Unterbrechung des Niederspannungsstromkreises initiiert, um einen Kurzschluss zu vermeiden. Insbesondere wird im Allgemeinen der momentane Schwellwert kleiner gelegt als der zu erwartende momentane Spannungswert. Bei Unterschreitung des momentanen Spannungswertes unter den momentanen Schwellwert in der positiven Halbwelle der Spannung erfolgt dann eine Unterbrechung des Niederspannungsstromkreises, speziell durch die elektronische Unterbrechungseinheit. In der negativen Halbwelle der Spannung erfolgt dann bei einer Überschreitung des momentanen Schwellwertes (größere Spannung vom Wert (da negativ), aber betragsmäßig kleinere Spannung) eine Unterbrechung des Niederspannungsstromkreises, zur Vermeidung eines Kurzschlusses, da ein Kurzschluss mit einem Spannungseinbruch verbunden ist. Alternativ wird aus dem momentanem Schwellwert und dem momentanen Spannungswert (fortlaufend) ein (momentaner) Differenzspannungswert gebildet. Der (momentane) Differenzspannungswert wird mit einem (absoluten oder momentanen) Differenzspannungsschwellwert verglichen. Bei dessen Überschreitung oder Unterschreitung, je nach Vorzeichen der Differenzbildung und Halbwelle der Spannung, wird eine Unterbrechung des Niederspannungsstromkreises initiiert, um einen Kurzschlussstrom zu vermeiden (der mit einem Spannungseinbruch verbunden ist, der durch diese Lösung erkannt wird).

Erfindungsgemäß ist damit vorteilhaft eine sehr schnelle Erkennung von Kurzschlüssen möglich (im Bereich eines Phasenwinkels der Spannung bzw. kleiner). Vorteilhaft ist ferner keine Stromermittlung bzw. kein Stromsensor erforderlich (sondern nur eine Spannungsermittlung bzw. ein Spannungssensor). Die Kurzschlussermittlung basiert auf einer reinen Spannungsmessung zwischen den (beiden) Leitern des Niederspannungsstromkreises. So kann vorteilhaft beispielsweise nachträglich eine Kurzschlussüberwachung integriert werden, ohne Leiter des Niederspannungsstromkreises zu unterbrechen. Vorsteilhafte Ausgestaltungen der Erfindung sind in den Unteransprüchen angegeben.

In einer vorteilhaften Ausgestaltung der Erfindung werden die momentanen Schwellwerte abhängig von der Amplitude der Spannung des Niederspannungsstromkreises angepasst, so dass bei hoher Amplitude der Spannung ein hoher momentaner Schwellwert und bei niedriger Amplitude der Spannung ein niedriger momentaner Schwellwert vorliegt.

Mit Amplitude ist hierbei, wie eingangs geschrieben, der Maximalwert der Spannung gemeint. Mit abhängig von der Amplitude ist hierbei ferner die Amplitude mindestens einer oder mehrerer voller Schwingungen (bzw. Periodendauern) der elektrischen Spannung gemeint (1...n * 360°). D.h. eine Anpassung der Schwellwerte soll erst nach mindestens einer vollen Schwingung (360°) (da nach mindestens einer vollen Schwingung logischerweise erst eine Amplitude vorliegt) bzw. nach mehreren vollen Schwingungen der elektrischen Spannung erfolgen, insbesondere nach 5 bis 25 vollen Schwingungen, d.h. nach 100 ms bis 500 ms (für 50 Hz). Alternativ kann auch erst eine Anpassung im Sekunden-Bereich erfolgen, dann haben kurze Netzschwankungen keinen Einfluss auf die Schwellwerte.

Dies hat den besonderen Vorteil, dass bezogen auf langzeitliche Spannungsänderungen (d.h. über mehrere Periodendauern bzw. Schwingungen) hinweg eine Anpassung der momentanen Schwellwerte erfolgt, um eine genaue und schnelle Erkennung von kurzschlussbedingten Spannungseinbrüchen zu erreichen.

In einer vorteilhaften Ausgestaltung der Erfindung werden die Beträge der momentanen Spannungswerte mit den (insbesondere betragsmäßigen) momentanen Schwellwerten phasenwinkelbezogen derart verglichen, dass bei Unterschreitung des Betrags des momentanen Schwellwertes oder

dass aus dem (insbesondere betragsmäßigen) momentanem Schwellwert und dem Betrag des momentanen Spannungswert der Differenzspannungswert gebildet wird, dass der Differenzspannungswert mit dem Differenzspannungsschwellwert verglichen wird und bei dessen Überschreitung, eine Unterbrechung des Niederspannungsstromkreises initiiert wird.

Dies hat den besonderen Vorteil, dass eine von der positiven oder negativen Halbwelle der Spannung unabhängige Auswertung der Schwellwertüberwachung implementiert werden kann, da nur die Beträge in Betracht gezogen werden müssen.

In einer vorteilhaften Ausgestaltung der Erfindung die Überschreitung oder Unterschreitung für eine erste Zeitspanne vorliegen, um eine Unterbrechung des Niederspannungsstromkreises zu initiieren. Mit erster Zeitspanne ist insbesondere eine Überschreitung über mehrere Phasenwinkel, insbesondere über 0,1° Phasenwinkel bzw. eine erste Zeitspanne größer als 5,6 $\mu$s, spezieller von 0,1° Phasenwinkel bis 2° Phasenwinkel - respektive 5,6 $\mu$s bis 111 $\mu$s, gemeint.

Dies hat den besonderen Vorteil, dass eine robuste Lösung realisiert werden kann, die bei kurzen Spikes eine Fehlauslösung vermeidet.

In einer vorteilhaften Ausgestaltung der Erfindung ist das Schutzschaltgerät derart ausgestaltet, dass die Steuerungseinheit eine analoge erste Teileinheit und eine digitale zweite Teileinheit aufweist. Die erste Teileinheit weist einen Spannungskomparator auf, dem die momentanen Spannungswerte des Spannungssensors und die momentanen Schwellwerte von der zweiten Teileinheit zugeführt werden, zum Vergleich der momentanen Spannungswerte mit den momentanen Schwellwerten und Initiierung einer Unterbrechung des Niederspannungsstromkreises bei Überschreitung oder Unterschreitung. Die momentanen Spannungswerte werden zudem der zweiten Teileinheit zugeführt, zur Ermittlung der momentanen Schwellwerte.

Dies hat den besonderen Vorteil, dass eine effiziente Architektur vorliegt. Dier erste analoge Teileinheit kann einen sehr schnellen Vergleich von momentanen Spannungswerten und Schwellwerten durchführen, wodurch eine schnelle Kurzschlusserkennung möglich ist. Die zweite Teileinheit kann eine davon unabhängige Schwellwertberechnung bzw. Anpassung durchführen, die nicht so schnell wie die Erkennung durchgeführt werden muss. Die Schwellwerte können beispielsweise zwischengespeichert werden, um für einen schnellen Vergleich zur Verfügung zu stehen. Die Schwellwerte müssen nicht ständig angepasst werden.

In einer vorteilhaften Ausgestaltung der Erfindung ist das Schutzschaltgerät derart ausgestaltet, dass eine Netzsynchronisationseinheit vorgesehen ist. Die Netzsynchronisationseinheit kann aus dem zugeführten momentanen Spannungswerten:

- einen erwarteten Zeitwert (UE) der Spannung ermitteln,
- einen Phasenwinkel ($\varphi(t)$) der Spannung ermitteln,
- die Amplitude (U) der Spannung ermitteln. Ferner ist eine Schwellwerteinheit vorgesehen, der der erwartete Zeitwert, der Phasenwinkel ($\varphi(t)$) und die Amplitude (U) der Spannung zugeführt wird. Die Schwellwerteinheit ermittelt daraus die momentanen Schwellwerte. Die momentanen Spannungswerte werden mit den momentanen Schwellwerten verglichen, zur Ermittlung der Initiierung einer Unterbrechung.

Dies hat den besonderen Vorteil, dass eine einfache Vergleichsmöglichkeit und Realisierung gegeben sind, insbesondere bei Einsatz einer PLL.

In einer vorteilhaften Ausgestaltung der Erfindung ist das Schutzschaltgerät derart ausgestaltet, dass eine Netzsynchronisationseinheit vorgesehen ist, die aus dem zugeführten momentanen Spannungswerten:

- einen erwarteten Zeitwert (UE) der Spannung abgibt,
- einen Phasenwinkel ($\varphi(t)$) der Spannung abgibt,
- die Amplitude (U) der Spannung abgibt.

Es ist eine Schwellwerteinheit vorgesehen, der der Phasenwinkel ($\varphi(t)$) und die Amplitude (U) der Spannung zugeführt wird und die daraus, insbesondere momentane, Differenzspannungsschwellwert ermittelt.

Die momentanen Spannungswerte und der erwartete Zeitwert der Spannung werden einer Differenzeinheit zugeführt, die einen, insbesondere phasenwinkelabhängigen Differenzspannungswert ermittelt. Der momentane Differenzspannungswert wird mit dem, insbesondere momentanen, Differenzspannungsschwellwert verglichen, zur Ermittlung der Initiierung einer Unterbrechung. Dies hat den besonderen Vorteil, dass eine weitere einfache Vergleichsmöglichkeit und Realisierung gegeben sind, insbesondere bei Einsatz einer PLL.

In einer vorteilhaften Ausgestaltung der Erfindung ist ein mechanisches Trennkontaktsystem vorgesehen, das stromkreisseitig in Serie zur elektronischen Unterbrechungseinheit geschaltet ist, so dass eine galvanische Trennung im Niederspannungsstromkreis geschaltet werden kann. Das mechanische Trennkontaktsystem ist mit der Steuerungseinheit verbunden. Dies hat den besonderen Vorteil, dass sowohl eine schnelle Unterbrechung des elektrischen Niederspannungswechselstromkreises durch die elektronische Unterbrechungseinheit als auch eine galvanische Trennung, insbesondere mit Trennereigenschaften gemäß Norm, d.h. eine Freischaltung, realisiert werden kann. So liegt ein umfassendes Schutzschaltgerät vor.

In einer vorteilhaften Ausgestaltung der Erfindung ist ein Stromsensor zur Ermittlung der Höhe des Stromes des Niederspannungsstromkreises vorgesehen.

Dies hat den besonderen Vorteil, dass weitere vorteilhafte Schutz und Absicherungsfunktionen ermöglicht werden.

In einer vorteilhaften Ausgestaltung der Erfindung wird bei (defekter) hochohmiger elektronischer Unterbrechungseinheit und einem Strom im Niederspannungsstromkreis, der einen ersten Stromschwellwert überschreitet, eine galvanische Trennung initiiert.

Dies hat den besonderen Vorteil, dass bei Restströmen oder einer fehlerhaften elektronischen Unterbrechungseinheit eine Freischaltung des Stromkreises gegeben ist, d.h. eine erhöhte Sicherheit wird bereitgestellt.

In einer vorteilhaften Ausgestaltung der Erfindung wird die ermittelte Stromhöhe mit einem zweiten Stromschwellwert verglichen und bei dessen Überschreitung eine Unterbrechung des Niederspannungsstromkreises, insbesondere durch das mechanische Trennkontaktsystem (MK), initiiert.

Dies hat den besonderen Vorteil, dass eine zusätzliche strombasierte Überstrom- bzw. Kurzschlusserkennung implementiert ist, wodurch die Auslösesicherheit erhöht wird.

In einer vorteilhaften Ausgestaltung der Erfindung wird bei einer Initiierung einer Unterbrechung des Niederspannungsstromkreises mittels der elektronischen Unterbrechungseinheit und einem Stromfluss im Niederspannungsstromkreis, der einen dritten Stromschwellwert überschreitet und für eine zweite Zeitspanne anhält, die insbesondere größer als die Auslösezeit mittels der elektronischen Unterbrechungseinheit ist, eine Unterbrechung des Niederspannungsstromkreises durch das mechanische Trennkontaktsystem initiiert.

Dies hat den besonderen Vorteil, dass bei defekter elektronischer Unterbrechungseinheit, beispielsweise wenn die halbleiterbasierten Schaltelemente durch-legiert sind, d.h. wenn eine Unterbrechung durch die elektronische Unterbrechungseinheit fehlgeschlagen ist, eine Unterbrechung des Niederspannungsstromkreises gegeben ist. Dies erfolgt bevorzugt nach der üblichen Auslösezeit mittels der elektronischen Unterbrechungseinheit.

In einer vorteilhaften Ausgestaltung der Erfindung werden die momentanen Schwellwerte pro Phasenwinkel der Spannung des Niederspannungsstromkreises ermittelt, insbesondere durch die digitale zweite Teileinheit, die eine digitale Ermittlung der momentanen Schwellwerte mit einer Taktfrequenz zwischen 10 kHz und 10 MHz, insbesondere 10 kHz und 1 MHz, spezieller zwischen 10 kHz und 100 kHz, insbesondere ab 18 KHz durchführt.

Dies hat den besonderen Vorteil, dass einerseits eine schnelle und andererseits eine nicht zu aufwendige Realisierung gegeben ist.

Erfindungsgemäß wird ein korrespondierendes Verfahren für ein Schutzschaltgerät für einen Niederspannungsstromkreis mit elektronischen (halbleiterbasierten) Schaltelementen mit den gleichen und weiteren Vorteilen beansprucht.

Alle Ausgestaltungen, sowohl in abhängiger Form rückbezogen auf den Patentanspruch 1 bzw. 15, als auch rückbezogen lediglich auf einzelne Merkmale oder Merkmalskombinationen von Patentansprüchen, bewirken eine Verbesserung eines Schutzschaltgerätes zur schnellen und sicheren Abschaltung bei Kurzschlüssen.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden.

Dabei zeigt die Zeichnung:

Figur 1 eine Darstellung eines Schutzschaltgerätes,
Figur 2 eine erste Ausgestaltung des Schutzschaltgerätes,
Figur 3 eine zweite Ausgestaltung des Schutzschaltgerätes,
Figur 4 eine dritte Ausgestaltung des Schutzschaltgerätes,
Figur 5 Strom- und Spannungsverläufe über der Zeit,
Figur 6 Spannungs- und Schwellwertverläufe über der Zeit.

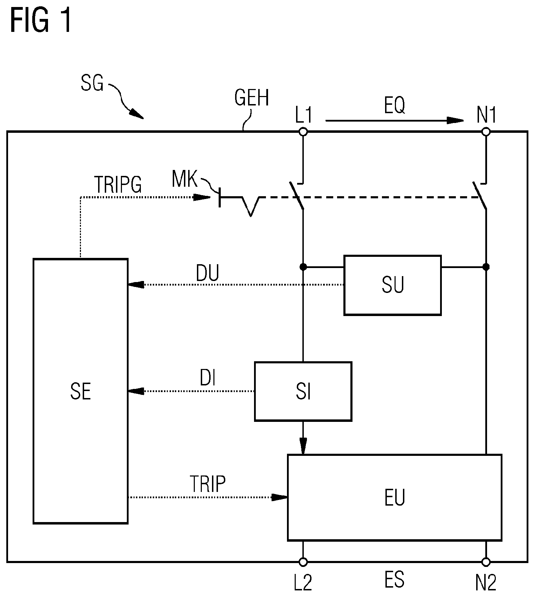

Figur 1 zeigt eine Darstellung eines Schutzschaltgerätes SG zum Schutz eines elektrischen Niederspannungsstromkreises mit einem Gehäuse GEH, aufweisend:

- Anschlüsse für Leiter des Niederspannungsstromkreises, insbesondere erste Anschlüsse L1, N1 für eine netzseitigen, insbesondere energiequellenseitigen, Anschluss EQ des Schutzschaltgerätes SG und zweite Anschlüsse L2, N2 für einen lastseitigen, insbesondere energiesenkenseitigen - im Falle passiver Lasten, Anschluss ES (verbraucherseitigen Anschluss) des Schutzschaltgerätes SG, wobei speziell phasenleiterseitige Anschlüsse L1, L2 und neutralleiterseitige Anschlüsse N1, N2 vorgesehen sein können;
  der lastseitige Anschluss kann eine passive Last (Verbraucher) oder/und eine aktive Last ((weitere) Energiequelle) aufweisen, bzw. eine Last, die sowohl passiv als auch aktiv sein kann, z.B. in zeitlicher Abfolge;
- einen Spannungssensor SU, zur Ermittlung der Höhe der Spannung des Niederspannungsstromkreises, so dass momentane Spannungswerte (phasenbezogene Spannungswerte) DU vorliegen,
- einer elektronischen Unterbrechungseinheit EU, die durch halbleiterbasierte Schaltelemente einen hochohmigen Zustand der Schaltelemente zur Unterbrechung und einen niederohmigen Zustand der Schaltelemente zum Stromfluss im Niederspannungsstromkreis aufweist,

- einer Steuerungseinheit SE, die mit dem Spannungssensor und der Unterbrechungseinheit verbunden ist.

Das Schutzschaltgerät SG, insbesondere die Steuerungseinheit SE, ist derart ausgestaltet, dass momentane (phasenwinkelbezogene) Schwellwerte vorliegen. Beispielsweise könnte in einem einfachen Fall die Sinuskurve der Spannung, beispielsweise mit 230 Volt Effektivwert, deren Amplitude bei 325 Volt liegt, pro Phasenwinkel mit Ihrem erwarteten momentanen Spannungswert abzüglich eines Abschlags von beispielsweise 10% oder einem Wert zwischen 10 bis 30% oder einem festen Abschlag von mindestens 10 Volt als momentaner Schwellwert hinterlegt sein, wobei als minimaler momentaner Schwellwert ein Wert von mindestens 10 Volt verwendet wird (um Fehlauslösungen zu vermeiden). Bei einem Abschlag von beispielsweise 10%: 10 Volt bei 0° (minimaler momentaner Schwellwert), ..., 146,25 Volt (162,5 Volt - 10 %) bei 30°, ..., 206,8 Volt (229,8 Volt - 10%) bei 45°, ..., 253,3 Volt (281,4 Volt - 10 %) bei 60°, 292,5 Volt (325 Volt - 10 %) bei 90°, usw.

Die momentanen Schwellwerte können dabei pro einzelnen Phasenwinkel, einen Phasenwinkelbereich (mehrere Phasenwinkel), z.B. alle 2°, oder einen Phasenwinkelabschnitt (ein Teil eines Phasenwinkels), z.B. alle 0,5° vorliegen.

Die momentanen Spannungswerte DU werden mit den momentanen Schwellwerten phasenwinkelbezogen verglichen. Bei Unterschreitung oder Überschreitung der momentanen Schwellwerte wird eine Unterbrechung des Niederspannungsstromkreises initiiert, um einen Kurzschlussstrom zu vermeiden. Zur Kurzschlussstromvermeidung bei einem Niederspannungswechselstromkreis wird in der positiven Halbwelle auf eine Unterschreitung der momentanen Schwellwerte geprüft, in der negativen Halbwelle auf eine Überschreitung der momentanen Schwellwerte geprüft.

Alternativ können auch die Beträge der momentanen Spannungswerte DU ermittelt werden. Die Beträge werden dann gegen eine Unterschreitung (der Beträge) der momentanen Schwellwerte geprüft, womit vorteilhaft eine Vorzeichenberücksichtigung entfällt. Der Vergleich erfolgt phasenwinkelbezogen, d.h. der momentane Spannungswert von z.B. 30° Phasenwinkel der Spannung wird gegen den momentanen Schwellwert von 30° Phasenwinkel der Spannung geprüft.

Alternativ kann (fortlaufend) aus dem momentanem Schwellwert (ggfs. dessen Betrag) und dem momentanen Spannungswert DU (ggfs. dessen Beitrag) ein (momentaner) Differenzspannungswert gebildet werden. Der (momentane) Differenzspannungswert wird mit einem (absoluten oder momentanen) Differenzspannungsschwellwert verglichen und bei dessen Überschreitung (oder Unterschreitung - bei vorzeichenbehaftetem Vergleich) eine Unterbrechung des Niederspannungsstromkreises initiiert, um einen Kurzschluss zu vermeiden.

Alternativ kann ebenfalls eine Korridorüberprüfung erfolgen, d.h. weist der momentane Spannungswert mehr als ein bestimmter Prozentsatz, insbesondere 10 % (bzw. einem Wert im Bereich 5 bis 15 %), bzw. einen bestimmten +/- Spannungsbetrag, insbesondere einem Wert im Bereich 20 bis 40 Volt, speziell 30 Volt, vom erwarteten Schwellwert bzw. erwarteten Spannungswert ab, erfolgt eine Initiierung der Unterbrechung des Niederspannungsstromkreises.

Die Initiierung der Unterbrechung des Niederspannungsstromkreises erfolgt beispielsweise durch ein (erstes) Signal TRIP, dass von der Steuerungseinheit SE zur elektronischen Unterbrechungseinheit EU gesendet wird, wie in Figur 1 eingezeichnet.

Die Unterschreitung oder Überschreitung kann vorteilhaft für eine erste Zeitspanne respektive für einen Phasenwinkelbereich oder Phasenwinkelabschnitt vorliegen, um eine Unterbrechung des Niederspannungsstromkreises zu initiieren.

Die elektronische Unterbrechungseinheit EU ist gemäß Figur 1 als Block in beiden Leitern eingezeichnet. Damit ist in einer ersten Variante keine Unterbrechung beider Leiter gemeint. Mindestens ein Leiter, insbesondere der aktive Leiter respektive Phasenleiter, weist halbleiterbasierte Schaltelemente auf. Der Neutralleiter kann schaltelementefrei sein, d.h. ohne halbleiterbasierte Schaltelemente. D.h. der Neutralleiter ist direkt verbunden, d.h. wird nicht hochohmig. D.h. es erfolgt nur eine einpolige Unterbrechung (des Phasenleiters). Sind weitere aktive Leiter / Phasenleiter vorgesehen, weisen in einer zweiten Variante der elektronischen Unterbrechungseinheit EU die Phasenleiter halbleiterbasierten Schaltelemente auf. Der Neutralleiter ist direkt verbunden, d.h. wird nicht hochohmig. Beispielsweise für einen Dreiphasen-Wechselstromkreis.

In einer dritten Variante der elektronischen Unterbrechungseinheit EU kann der Neutralleiter ebenfalls ein halbleiterbasiertes Schaltelement aufweisen, d.h. bei einer Unterbrechung der elektronischen Unterbrechungseinheit EU werden beide Leiter hochohmig.

Die elektronische Unterbrechungseinheit EU kann Halbleiterbauelemente wie Bipolartransistoren, Feldeffekttransistoren (FET), Isolated Gate Bipolartransistoren (IGBT), Metall Oxid Schicht Feldeffekttransistoren (MOSFET) oder andere (selbstgeführte) Leistungshalbleiter aufweisen. Insbesondere IGBT's und MOSFET's eignen sich auf Grund geringer Durchflusswiderstände, hoher Sperrschichtwiderstände und eines guten Schaltverhaltens besonderes gut für das erfindungsgemäße Schutzschaltgerät.

Zusätzlich, für eine Ausgestaltung der Erfindung, kann ferner ein Stromsensor SI, zur Ermittlung der Höhe des Stromes des Niederspannungsstromkreises, so dass Stromwerte DI vorliegen, vorgesehen sein, wie im Beispiel gemäß Figur 1 eingezeichnet. Der Stromsensor SI ist dann mit der Steuerungseinheit SE verbunden.

Das Schutzschaltgerät SG kann bevorzugt ferner ein mechanisches Trennkontaktsystem MK aufweisen, insbesondere gemäß Norm mit normgerechten Trennereigenschaften, zur galvanischen Trennung des Stromkreises, insbesondere zum normgerechten Freischalten (im Gegensatz zum Abschalten) des Stromkreises. Das mechanische Trennkontaktsystem MK kann mit der Steuerungseinheit SE verbunden sein, wie in Figur 1 eingezeichnet, so dass die Steuerungseinheit SE eine galvanische Trennung des Stromkreises initiieren kann.

Speziell kann eine weitere Auswertung implementiert sein, die bei Erfüllung anderer Kriterien eine galvanische Trennung herbeiführt. Beispielsweise kann eine Überstromerkennung vorgesehen sein, beispielsweise in der Steuerungseinheit SE, die bei Überströmen, d.h. bei Überschreitung von Strom-Zeitgrenzwerten, d.h. wenn ein Strom, der einen Stromgrenzwert überschreitet, eine bestimmte Zeit anliegt, d.h. beispielsweise ein bestimmter Energieschwellwert überschritten, eine halbleiterbasierte oder/und galvanische Unterbrechung des Stromkreises erfolgen.

Alternativ bzw. zusätzlich kann beispielsweise bei einem erkannten Kurzschluss auch eine galvanische Trennung initiiert werden.

Die Initiierung der galvanischen Unterbrechung des Niederspannungsstromkreises erfolgt beispielsweise durch ein weiteres (zweites) Signal TRIPG, dass von der Steuerungseinheit SE zum mechanisches Trennkontaktsystem MK gesendet wird, wie in Figur 1 eingezeichnet.

In einer weiteren vorteilhaften Ausgestaltung kann bei (defekter) hochohmiger elektronischer Unterbrechungseinheit EU und einem Strom im Niederspannungsstromkreis, der insbesondere durch den Stromsensor SI festgestellt wird, der einen ersten Stromschwellwert überschreitet, eine galvanische Trennung initiiert werden. Der erste Stromschwellwert kann je nach Einsatzgebiet des Schutzschaltgerätes in der Größenordnung 4 bis 6 mA, insbesondere bei 5 mA oder 6 mA liegen. Der erste Stromschwellwert kann im Bereich 26 mA bis 30mA liegen, insbesondere bei 28 mA, 29 mA oder 30 mA, insbesondere für den Personenschutz in Europa. Der dritte Schwellwert kann im Bereich 290 mA bis 300 mA liegen, insbesondere für den Brandschutz. Jeder der genannten Rand- und Zwischenwerte ist offenbart.

In einer weiteren vorteilhaften Ausgestaltung kann bei einer ermittelten Stromhöhe, die einen zweiten Stromschwellwert überschreitet, eine Unterbrechung des Niederspannungsstromkreises initiiert werden, insbesondere durch das mechanische Trennkontaktsystem.

Der zweite Stromschwellwert entspricht beispielsweise den normgemäßen Strom-(Zeit-)Grenzwerten, d.h. den I-(t-)Kennlinien für Schutzgeräte, beispielsweise gemäß Norm IEC 60947 oder IEC 60898. Die gewählten Strom-(Zeit-)Grenzwerte wählt der Fachmann gemäß der vorliegenden Anwendung / Applikation.

In einer weiteren vorteilhaften Ausgestaltung kann bei einer Initiierung einer Unterbrechung des Niederspannungsstromkreises mittels der elektronischen Unterbrechungseinheit und einem Stromfluss im Niederspannungsstromkreis, der einen dritten Stromschwellwert überschreitet und für eine zweite Zeitspanne anhält, eine Unterbrechung des Niederspannungsstromkreises durch das mechanische Trennkontaktsystem initiiert werden, um eine fehlgeschlagenes Hochohmigkeit der elektronischen Unterbrechungseinheit und damit fehlgeschlagene Unterbrechung des Niederspannungsstromkreis eine Unterbrechung durch das mechanische Trennkontaktsystem herbeizuführen. So wird vorteilhaft die Betriebssicherheit erhöht. Ein solcher Vorgang kann vorteilhaft am Schutzschaltgerät angezeigt werden.

Der dritte Stromschwellwert und die zweite Zeitspanne entspricht beispielsweise den normgemäßen Strom-Zeit-Grenzwerten, d.h. den I-t-Kennlinien für Schutzgeräte, beispielsweise gemäß Norm IEC 60947 oder IEC 60898. Die gewählten Strom-Zeit-Grenzwerte wählt der Fachmann gemäß der vorliegenden Anwendung / Applikation.

Das mechanische Trennkontaktsystem MK kann in einer ersten Variante einpolig unterbrechen. D.h. es wird nur ein Leiter der beiden Leiter, insbesondere der aktive Leiter respektive Phasenleiter unterbrochen, d.h. weist einen mechanischen Kontakt auf. Der Neutralleiter ist dann kontaktfrei, d.h. der Neutralleiter ist direkt verbunden.

Sind weitere aktive Leiter / Phasenleiter vorgesehen, weisen in einer zweiten Variante die Phasenleiter mechanische Kontakte des mechanischen Trennkontaktsystems auf. Der Neutralleiter ist in dieser zweiten Variante direkt verbunden. Beispielsweise für einen Dreiphasen-Wechselstromkreis.

In einer dritten Variante des mechanischen Trennkontaktsystem MK weist der Neutralleiter ebenfalls mechanische Kontakte auf, wie in Figur 1 eingezeichnet.

Mit mechanischem Trennkontaktsystem MK ist insbesondere eine (normgerechte) Trennfunktion gemeint, realisiert durch das Trennkontaktsystem MK. Mit Trennfunktion sind die Punkte:

- Mindestluftstrecke nach Norm (Mindestabstand der Kontakte),
- Kontaktstellungsanzeige der Kontakte des mechanischen Trennkontaktsystem,
- Betätigung des mechanischen Trennkontaktsystem immer möglich

(keine Blockierung des Trennkontaktsystems), gemeint.

Hinsichtlich der Mindestluftstrecke zwischen den Kontakten des Trennkontaktsystem ist diese im Wesentlichen spannungsabhängig. Weitere Parameter sind der Verschmutzungsgrad, die Art des Feldes (homogen, inhomogen), und der Luftdruck bzw. die Höhe über Normalnull.

Für diese Mindestluftstrecken bzw. Kriechstrecken gibt es entsprechende Vorschriften bzw. Normen. Diese Vorschriften geben beispielsweise bei Luft für eine Stoßspannungsfestigkeit die Mindestluftstrecke für ein inhomogenes und ein homogenes (ideales) elektrisches Feld in Abhängigkeit vom Verschmutzungsgrad an. Die Stoßspannungsfestigkeit ist die Festigkeit beim Anlegen einer entsprechenden Stoßspannung. Nur bei Vorliegen dieser Mindestlänge (Mindeststrecke) weist das Trennkontaktsystem bzw. Schutzschaltgerät eine Trennfunktion (Trennereigenschaft) auf.

Im Sinne der Erfindung sind hierbei für die Trennerfunktion und deren Eigenschaften der Normenreihe DIN EN 60947 bzw. IEC 60947 einschlägig, auf die hier durch Referenz Bezug genommen wird.

Das Trennkontaktsystem ist vorteilhafterweise durch eine Mindestluftstrecke der geöffneten Trennkontakte in der AUS-Stellung (Geöffnet Stellung, geöffnete Kontakte) in Abhängigkeit von der Bemessungsstoßspannungsfestigkeit und dem Verschmutzungsgrad gekennzeichnet. Die Mindestluftstrecke beträgt insbesondere zwischen (im Minimum) 0,01 mm und 14 mm. Insbesondere beträgt vorteilhafterweise die Mindestluftstrecke zwischen 0,01 mm bei 0,33 kV und 14 mm bei 12 kV, insbesondere für Verschmutzungsgrad 1 sowie insbesondere für inhomogene Felder.

Vorteilhafterweise kann die Mindestluftstrecke die folgenden Werte aufweisen:

**Tabelle 13** - **Mindestluftstrecken**

| Bemessungsstoßspannungsfestigkeit $U_{imp}$ kV | Mindestluftstrecken mm | | | | | | | |
| --- | --- | --- | --- | --- | --- | --- | --- | --- |
| | Fall A inhomogenes Feld (siehe 3.7.63) | | | | Fall B homogenes Feld, ideale Bedingungen (siehe 3.7.62) | | | |
| | Verschmutzungsgrad | | | | Verschmutzungsgrad | | | |
| | 1 | 2 | 3 | 4 | 1 | 2 | 3 | 4 |
| 0,33 | 0,01 | 0,2 | 0,8 | 1,6 | 0,01 | 0,2 | 0,8 | 1,6 |
| 0,5 | 0,04 | | | | 0,04 | | | |
| 0,8 | 0,1 | | | | 0,1 | | | |
| 1,5 | 0,5 | 0,5 | | | 0,3 | 0,3 | | |
| 2,5 | 1,5 | 1,5 | 1,5 | | 0,6 | 0,6 | | |
| 4,0 | 3 | 3 | 3 | 3 | 1,2 | 1,2 | 1,2 | |
| 6,0 | 5,5 | 5,5 | 5,5 | 5,5 | 2 | 2 | 2 | 2 |
| 8,0 | 8 | 8 | 8 | 8 | 3 | 3 | 3 | 3 |
| 12 | 14 | 14 | 14 | 14 | 4,5 | 4,5 | 4,5 | 4,5 |
| ANMERKUNG Die angegebenen kleinsten Luftstrecken beruhen auf der 1,2/50-us-Stoßspannung bei einem Luftdruck von 80 kPa, was dem Luftdruck bei 2 000 m über NN entspricht. | | | | | | | | |

Die Verschmutzungsgrade und Feldarten entsprechen den in den Normen definierten. Dadurch lässt vorteilhafterweise ein entsprechend der Bemessungsstoßspannungsfestigkeit dimensioniertes normgerechtes Schutzschaltgerät erzielen.

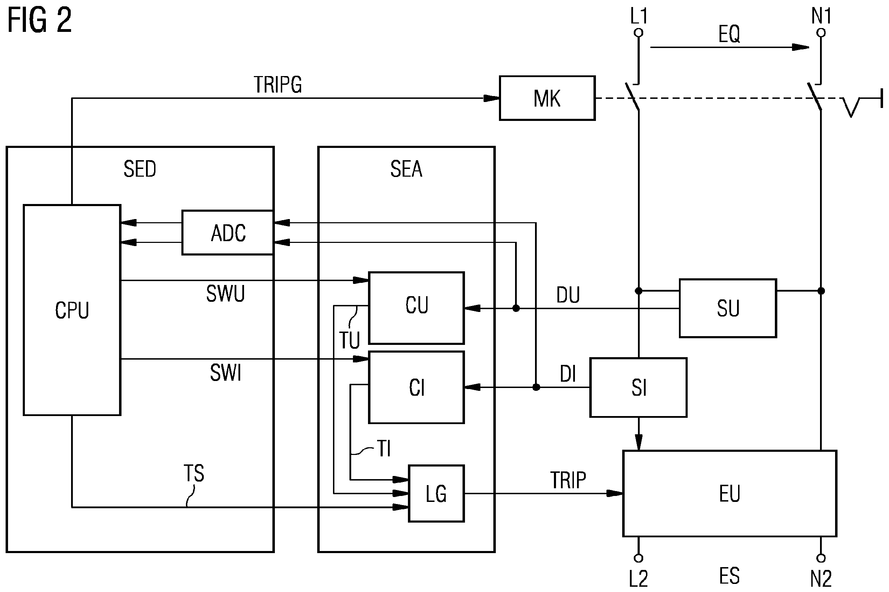

Figur 2 zeigt eine Darstellung gemäß Figur 1, mit einer weiteren detaillierten Ausgestaltung. Hierbei weist die Steuerungseinheit SE zwei Teileinheiten auf, eine, bevorzugt analoge, erste Teileinheit SEA und eine, bevorzugt digitale, zweite Teileinheit SED. Die erste Teileinheit SEA weist hierbei einen Spannungskomparator CU auf. Diesem werden einerseits die momentanen Spannungswerte DU des Spannungssensors SU zugeführt. Andererseits werden dem Spannungskomparator CU die momentanen Schwellwerte SWU von der zweiten Teileinheit SED zugeführt.

Der Spannungskomparator CU vergleicht die momentanen Spannungswerte DU mit den momentanen Schwellwerten SWU und gibt, wie beschrieben bei Überschreitung oder Unterschreitung, ein Spannungsunterbrechungssignal TU, zur Initiierung einer Unterbrechung des Niederspannungsstromkreises, ab.

Das Spannungsunterbrechungssignal TU kann einer Logikeinheit LG zugeführt werden, die es mit anderen Unterbrechungssignalen kombiniert und das (erste) Signal TRIP zur halbleiterbasierten Unterbrechung bzw. hochohmigen Unterbrechung an die elektronische Unterbrechungseinheit EU abgibt.

In einer Ausgestaltung speichert der Spannungskomparator CU die momentanen Schwellwerte SWU zwischen, um die Werte ständig zur Verfügung zu haben.

Die momentanen Spannungswerte DU werden zudem der zweiten Teileinheit SED zugeführt. In einer bevorzugten Ausgestaltung werden die momentanen Spannungswerte DU dort durch einen Analog-Digital-Umsetzer ADC digitalisiert und einem Mikroprozessor CPU zugeführt. Dieser führte eine Ermittlung bzw. Berechnung der momentanen Schwellwerte SWU durch. Die durch die zweite Teileinheit SED bzw. insbesondere den Mikroprozessor CPU ermittelten momentanen Schwellwerte SWU werden wiederum der ersten Teileinheit SEA zugeführt, insbesondere dem Spannungskomparator CU, um den oben beschriebenen Vergleich durchzuführen.

Dabei kann vorteilhaft die Ermittlung der momentanen Schwellwerte SWU in der zweiten Teileinheit SED digital erfolgen bzw. mit einer langsameren Verarbeitungsgeschwindigkeit als der fortlaufende Vergleich von Spannungswerten und Schwellwerten in der ersten Teileinheit SEA.

In einer vorteilhaften Ausgestaltung, bei der ein Stromsensor SI vorgesehen ist, der die Höhe des Stromes, d.h. momentane Stromwerte DI abgibt, kann die erste Teileinheit SEA einen Stromkomparator CI aufweisen. Diesem werden einerseits die momentanen Stromwerte DI des Stromsensors SI zugeführt. Andererseits werden dem Stromkomparator CI momentane Stromschwellwerte SWI von der zweiten Teileinheit SED zugeführt.

Der Stromkomparator CI vergleicht die momentanen Stromwerte DI mit den momentanen Stromschwellwerten SWI und gibt in analoger Weise bei betragsmäßiger Überschreitung des Stromes ein Stromunterbrechungssignal TI, zur Initiierung einer Unterbrechung des Niederspannungsstromkreises, ab.

Das Stromunterbrechungssignal TI kann der Logikeinheit LG zugeführt werden, die es mit anderen Unterbrechungssignalen kombiniert und das (erste) Signal TRIP zur halbleiterbasierten Unterbrechung bzw. hochohmigen Unterbrechung an die elektronische Unterbrechungseinheit EU abgibt.

In einer Ausgestaltung speichert der Stromkomparator CI die momentanen Stromschwellwerte SWI zwischen, um die Werte ständig zur Verfügung zu haben.

Die momentanen Stromwerte DI werden zudem der zweiten Teileinheit SED zugeführt. In einer bevorzugten Ausgestaltung werden die momentanen Stromwerte DI dort durch den Analog-Digital-Umsetzer ADC digitalisiert und dem Mikroprozessor CPU zugeführt. Dieser führte eine Ermittlung bzw. Berechnung der momentanen Stromschwellwerte SWI durch. Die durch die zweite Teileinheit SED bzw. insbesondere den Mikroprozessor CPU ermittelten momentanen Stromschwellwerte SWI werden wiederum der ersten Teileinheit SEA zugeführt, insbesondere dem Stromkomparator CU, um den oben beschriebenen Vergleich durchzuführen.

Dabei kann vorteilhaft die Ermittlung der momentanen Stromschwellwerte SWI in der zweiten Teileinheit SED digital erfolgen bzw. mit einer langsameren Verarbeitungsgeschwindigkeit als der fortlaufende Vergleich von Stromwerten und Schwellwerten in der ersten Teileinheit SEA.

Je nach Ausgestaltung kann ein zweites Unterbrechungssignal TRIPG von der zweiten Teileinheit SED, insbesondere vom Mikroprozessor CPU, zur galvanischen Unterbrechung des Niederspannungsstromkreises an das mechanische Trennkontaktsystem MK abgegeben werden, wie in Figur 2 eingezeichnet.

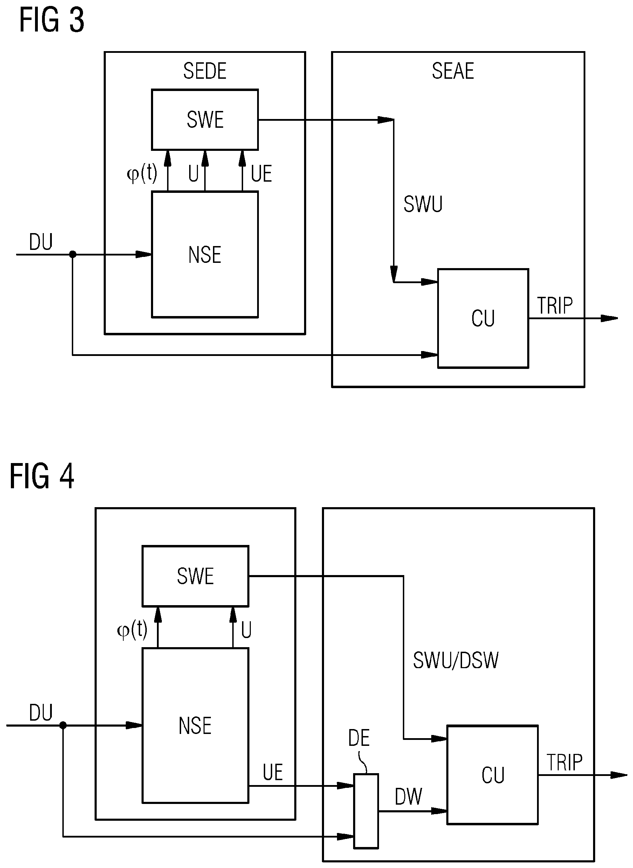

Figur 3 zeigt eine weitere Ausgestaltung bzw. Variante gemäß Figur 1 und Figur 2. Figur 3 zeigt einen Teil einer einfachen Variante der ersten, bevorzugt analogen, Teileinheit SEAE und einen Teil einer alternative Variante der, bevorzugt digitalen, zweiten Teileinheit SEDE auf.

Der Teil der einfachen Variante der ersten Teileinheit SEAE weist den Spannungskomparator CU auf, dem die momentanen Spannungswerte DU, insbesondere deren Betrag, und die momentanen Schwellwerte SWU, insbesondere ebenso betragsbezogen, zugeführt werden. Der Spannungskomparator CU gibt in diesem Beispiel direkt das erste Signal TRIP zur Unterbrechung des Niederspannungsstromkreises ab, analog zu Figur 2. Die Betragsbildung kann durch eine oder weitere, nicht dargestellte Einheiten erfolgen.

Der Teil der alternativen Variante der zweiten Teileinheit SEDE weist eine Netzsynchronisationseinheit NSE auf. Dieser werden die (analogen) momentanen Spannungswerte DU zugeführt. Die Netzsynchronisationseinheit NSE ermittelt aus den zugeführten (analogen) momentanen Spannungswerte DU, die eine sinusförmige Wechselspannung des Niederspannungsstromkreises sind, die Amplitude U, den Phasenwinkel $\varphi(t)$ und einen erwarteten Zeitwert der Spannung UE respektive Erwartungswert der Spannung UE. Der Erwartungswert der Spannung UE ist eine Art gefilterter bzw. regenerierter bzw. erzeugter äquivalenter momentaner Spannungswert DU.

Der Erwartungswert der Spannung UE, als auch die Amplitude U und der Phasenwinkel $\varphi(t)$, können beispielsweise durch eine so genannte Phase Locked Loop respektive Phasenregelschleife, kurz PLL, ermittelt werden. Eine PLL ist eine elektronische Schaltungsanordnung, die die Phasenlage und damit zusammenhängend die Frequenz eines veränderbaren Oszillators über einen geschlossenen Regelkreis so beeinflusst, dass die Phasenabweichung zwischen einem äußeren periodischen Referenzsignal (momentane Spannungswerte) und dem Oszillator oder einem daraus abgeleiteten Signal möglichst konstant ist.

Damit kann u.a. die Grundfrequenz und deren Amplitude der zugeführten Netzspannung, d.h. der ermittelten Spannungswerte, ermittelt werden, d.h. der (ungestörte bzw. gefilterte) Erwartungswert der (Netz-)Spannung.

Die von der Netzsynchronisationseinheit NSE ermittelte Amplitude U, Phasenwinkel $\varphi(t)$ und erwartete Zeitwert der Spannung UE werden einer Schwellwerteinheit SWE zugeführt. Die Schwellwerteinheit SWE modifiziert den Erwartungswert der Spannung UE zu einem momentanen Schwellwert SWU, wobei beispielsweise ein:

- fester Spannungsbetrag vom Erwartungswert der Spannung UE abgezogen werden kann oder
- ein vom Phasenwinkel abhängiger Spannungsbetrag vom Erwartungswert der Spannung UE abgezogen werden kann oder

- ein fester Prozentsatz der Spannung vom Erwartungswert der Spannung UE abgezogen werden kann oder
- ein vom Phasenwinkel abhängiger Prozentsatz der Spannung vom Erwartungswert der Spannung UE abgezogen werden kann, um den momentanen Schwellwert SWU zu erhalten.

Der momentane Schwellwert SWU kann ferner durch die Amplitude U der momentanen Spannung angepasst, d.h. dass bei hoher Amplitude der Spannung ein hoher momentaner Schwellwert und bei niedriger Amplitude der Spannung ein niedriger momentaner Schwellwert vorliegt.

Die momentanen Schwellwerte SWU können durch das Vorliegen des Phasenwinkels $\varphi(t)$ in der Schwellwerteinheit SWE von dieser synchron zur momentanen Spannung DU an den Spannungskomparator CU übermittelt werden, so dass ein phasenbezogener (phasenwinkelbezogener) Vergleich zwischen momentanen Schwellwert und momentanen Spannungswert im Spannungskomparator CU erfolgen kann.

Figur 4 zeigt eine alternative Ausgestaltung gemäß Figur 3, mit dem Unterschied, dass der Erwartungswert der Spannung UE nicht der Schwellwerteinheit SWE, sondern einer Differenzeinheit DE zugeführt wird. Ferner wird der momentane Spannungswert DU nicht dem Spannungskomparator CU, sondern der Differenzeinheit DE zugeführt. Die Differenzeinheit DE bildet eine Differenz aus Erwartungswert der Spannung UE und momentanen Spannungswert DU, wobei die phasenwinkelbezogen bzw. phasenwinkelgenau erfolgt. So wird ein (phasenwinkelabhängiger) Differenzspannungswert DW erzeugt, der dem Spannungskomparator CU zugeführt wird. Dem Spannungskomparator CU wird andererseits der momentane Schwellwert SWU zugeführt, der in diesem Beispiel phasenbezogen und Amplitudenbeeinflusst als (phasenbezogenen) Differenzspannungsschwellwert von der Schwellwerteinheit SWE bereitgestellt wird.

Der von der Netzsynchronisationseinheit, insbesondere in Form einer PLL, abgegebene Erwartungswert der Spannung UE wird in diesem Beispiel mit dem momentanen Spannungswert DU verglichen, insbesondere zeit- bzw. phasensynchron, so dass eine Differenz der Werte DW vorliegt. Häufig kann eine PLL selbst eine derartige Funktion durchführen, d.h. die Differenz abgeben, d.h. einen Differenzspannungswert DW.

Der Differenzspannungswert DW wird dann, insbesondere betragsmäßig, mit dem momentanen Schwellwert SWU, in diesem Fall ein Differenzspannungsschwellwert, verglichen.

Auch alternative Ausgestaltungen sind denkbar.

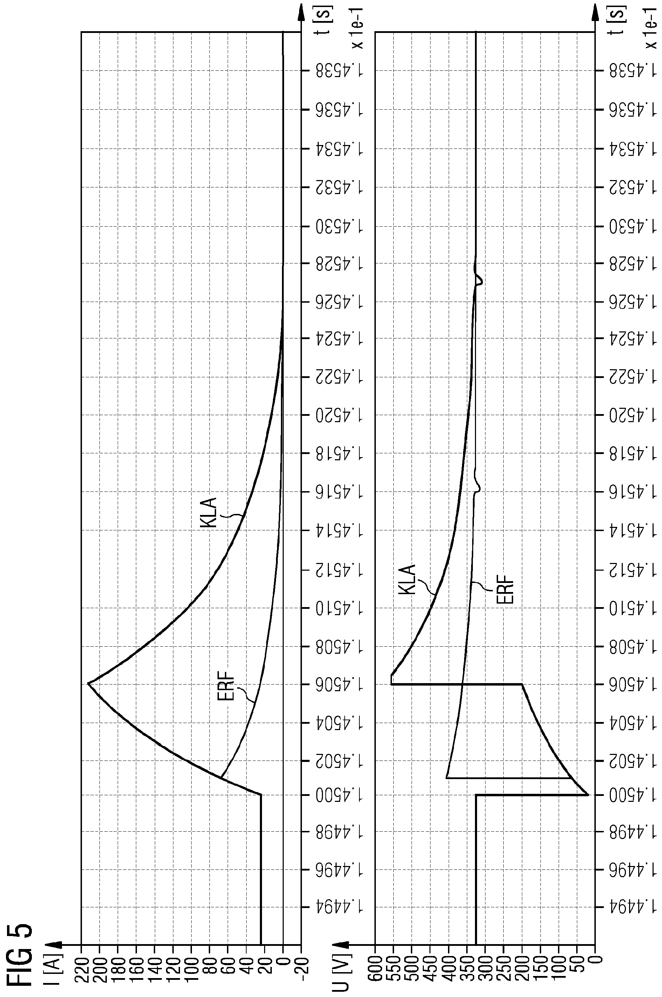

Figur 5 zeigt Verläufe von Strom I in Ampere A (oben) und Spannung U in Volt V (unten) - auf der vertikalen y-Achse - über der Zeit t in Sekunes s - auf der horizontalen x-Achse. Dargestellt ist der simulierte Vergleich des zeitlichen Verlaufs ERF der vorgestellten Erfindung gegenüber dem zeitlichen Verlauf KLA einer einfachen (klassischen) Überstromabschaltung. Ein Kurzschluss tritt bei t=145ms ein. Der Strom I steigt mit hoher Steilheit an und gleichzeitig bricht die gemessene Spannung U sprunghaft ein.

Der zeitliche Verlauf KLA der einfachen Überstromabschaltung, welche bei Überschreiten von 200 A den Stromfluss unterbricht. Aufgrund von Latenzen und Abschaltzeiten steigt der Strom jedoch nach Überschreiten des Grenzwertes kurzzeitig weiter an.

Der zeitliche Verlauf ERF der erfindungsgemäßen Kurzschlusserkennung basiert auf der Erkennung des starken Einbruchs der gemessenen Spannung, die durch phasengenauen Vergleich mit der erwarteten Spannung sehr schnell erkannt wird. Die Phasenwinkelauflösung bestimmt die Schnelligkeit der Berechnung der Schwellwerte. Bei einer Phasenwinkelauflösung von 1°, d.h. für jeden vollen Phasenwinkel der Spannung liegt ein Schwellwert vor, d.h. etwa alle 55,5 $\mu$s liegt ein momentaner Schwellwert vor. Die Abschaltung erfolgt über bevorzugt über einen analogen Komparator, d.h. kontinuierlich, und ist damit deutlich schneller als die Phasenwinkelauflösung.

Alternativ gilt bei einer voll digitalen Verarbeitung der folgende zeitliche Verlauf. Die Phasenwinkelauflösung bestimmt die Schnelligkeit der Erkennung. Bei einer Phasenwinkelauflösung von 1°, d.h. für jeden vollen Phasenwinkel der Spannung liegt ein Schwellwert vor, d.h. etwa alle 55,5 $\mu$s liegt ein momentaner Schwellwert vor, bedeutet dies, dass eine Abschaltung nach minimal ca. 60$\mu$s erfolgen kann. Bei höheren Phasenwinkelauflösungen lassen sich kürzere Abschaltzeiten erreichen.

In diesem Beispiel erfolgt dann eine Verarbeitung der Werte mit mindestens 18 kHz.

Alternativ kann der Erwartungswert der Spannung in einer Tabelle abgelegt sein, wobei dann phasensynchron die jeweiligen Spannungswerte verglichen werden bzw. eine phasensynchrone Differenz gebildet wird, so dass Differenzspannungswerte vorliegen.

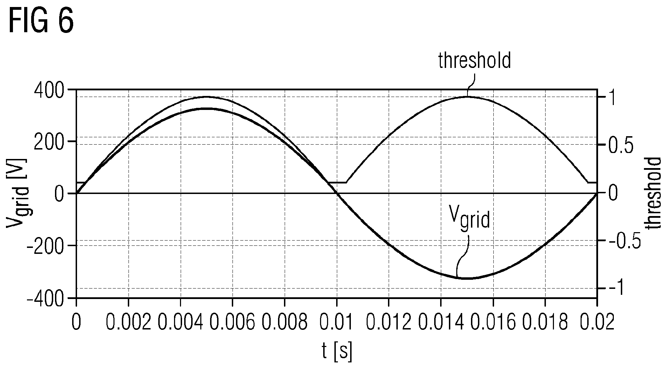

Figur 6 zeigt einerseits den Verlauf der Spannung Vgrid in Volt [V], auf der linken vertikalen Achse, einer Periode einer sinusförmigen Wechselspannung über der Zeit t in s [s], auf der horizontalen Achse.

Andererseits einen phasenwinkelbezogenen bzw. phasenwinkelabhängigen momentanen Schwellwert threshold, auf der rechten vertikalen Achse, über der Zeit t in s [s].

Hierbei ist im Beispiel der momentane Schwellwert größer als die momentane Spannung.

Obwohl die Erfindung im Detail durch das Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Schutzschaltgerät (SG) zum Schutz eines elektrischen Niederspannungsstromkreis aufweisend:

   - ein Gehäuse mit Anschlüssen (L1, N1, L2, N2) für Leiter des Niederspannungswechselstromkreises,
   - einen Spannungssensor (SU), zur Ermittlung der Höhe der Spannung des Niederspannungsstromkreises, derart das momentane Spannungswerte (DU) vorliegen,
   - einer elektronischen Unterbrechungseinheit (EU), die durch halbleiterbasierte Schaltelemente einen hochohmigen Zustand der Schaltelemente zur Unterbrechung und einen niederohmigen Zustand der Schaltelemente zum Stromfluss im Niederspannungsstromkreis aufweist,
   - einer Steuerungseinheit (SE), die mit dem Spannungssensor (SU) und der elektronischen Unterbrechungseinheit (EU) verbunden ist,

   **dadurch gekennzeichnet,**

   **dass** Schutzschaltgerät (SG) ist derart ausgestaltet,
   **dass** momentane Schwellwerte (SWU) vorliegen,
   **dass** die momentanen Spannungswerte (DU) mit den momentanen Schwellwerten (SWU) phasenwinkelbezogen derart verglichen werden,
   **dass** bei Überschreitung oder Unterschreitung der momentanen Schwellwerte (SWU) oder
   **dass** aus dem momentanem Schwellwert (SWU) und dem momentanen Spannungswert (DU) ein Differenzspannungswert (DW) gebildet wird, dass der Differenzspannungswert (DW) mit einem Differenzspannungsschwellwert (DSW) verglichen wird und bei dessen Überschreitung oder Unterschreitung
   eine Unterbrechung des Niederspannungsstromkreises initiiert wird, um einen Kurzschlussstrom zu vermeiden.

2. Schutzschaltgerät (SG) nach Patentanspruch 1,
   **dadurch gekennzeichnet,**
   **dass** die momentanen Schwellwerte (SWU) abhängig von der Amplitude (U) der Spannung des Niederspannungsstromkreises angepasst werden, so dass bei hoher Amplitude (U) der Spannung ein hoher momentaner Schwellwert (SWU) und bei niedriger Amplitude (U) der Spannung ein niedriger momentaner Schwellwert (SWU) vorliegt.

3. Schutzschaltgerät (SG) nach Patentanspruch 1 oder 2, **dadurch gekennzeichnet,**

   **dass** die Beträge der momentanen Spannungswerte (DU) mit den momentanen Schwellwerten (SWU) phasenwinkelbezogen derart verglichen werden,
   **dass** bei Unterschreitung des Betrags des momentanen Schwellwertes (SWU) oder
   **dass** aus dem momentanem Schwellwert (SWU) und dem Betrag des momentanen Spannungswert (DU) der Differenzspannungswert (DW) gebildet wird, dass der Differenzspannungswert (DW) mit dem Differenzspannungsschwellwert (DSW) verglichen wird und bei dessen Überschreitung eine Unterbrechung des Niederspannungsstromkreises initiiert wird.

4. Schutzschaltgerät (SG) nach einem der vorhergehenden Patentansprüche,
   **dadurch gekennzeichnet,**
   **dass** die Überschreitung oder Unterschreitung für eine erste Zeitspanne vorliegen muss, um eine Unterbrechung des Niederspannungsstromkreises zu initiieren.

5. Schutzschaltgerät (SG) nach einem der vorhergehenden Patentansprüche,
   **dadurch gekennzeichnet,**

   **dass** das Schutzschaltgerät (SG) derart ausgestaltet ist,
   **dass** die Steuerungseinheit eine analoge erste Teileinheit (SEA) und eine digitale zweite Teileinheit (SED) aufweist, dass die erste Teileinheit (SEA) einen Spannungskomparator (CU) aufweist, dem die momentanen Spannungswerte (DU) des Spannungssensors (SU) und die momentanen Schwellwerte (SWU) von der zweiten Teileinheit (SED) zugeführt werden, zum Vergleich der momentanen Spannungswerte (DU) mit den momentanen Schwellwerten (SWU) und Initiierung einer Unterbrechung des Niederspannungsstromkreises bei Überschreitung oder Unterschreitung,
   **dass** die momentanen Spannungswerte (DU) zudem der zweiten Teileinheit (SED) zugeführt werden, zur Ermittlung der momentanen Schwellwerte (SWU).

**6.** Schutzschaltgerät (SG) nach einem der vorhergehenden Patentansprüche,
**dadurch gekennzeichnet,**

**dass** das Schutzschaltgerät (SG) derart ausgestaltet ist, dass eine Netzsynchronisationseinheit (NSE) vorgesehen ist, die aus dem zugeführten momentanen Spannungswerten (DU):

- einen erwarteten Zeitwert (UE) der Spannung abgibt,
- einen Phasenwinkel ($\varphi(t)$) der Spannung abgibt,
- die Amplitude (U) der Spannung abgibt,

**dass** eine Schwellwerteinheit (SWE) vorgesehen ist, der der erwartete Zeitwert (UE), der Phasenwinkel ($\varphi(t)$) und die Amplitude (U) der Spannung zugeführt wird und die daraus die momentanen Schwellwerte (SWU) ermittelt,
**dass** die momentanen Spannungswerte (DU) mit den momentanen Schwellwerten (SWU) verglichen werden zur Ermittlung der Initiierung einer Unterbrechung.

**7.** Schutzschaltgerät (SG) nach einem der vorhergehenden Patentansprüche 1 bis 5,
**dadurch gekennzeichnet,**

**dass** das Schutzschaltgerät (SG) derart ausgestaltet ist, dass eine Netzsynchronisationseinheit (NSE) vorgesehen ist, die aus dem zugeführten momentanen Spannungswerten (DU):

- einen erwarteten Zeitwert (UE) der Spannung abgibt,
- einen Phasenwinkel ($\varphi(t)$) der Spannung abgibt,
- die Amplitude (U) der Spannung abgibt,

**dass** eine Schwellwerteinheit SWE vorgesehen ist, der der Phasenwinkel ($\varphi(t)$) und die Amplitude (U) der Spannung zugeführt wird und die daraus, insbesondere momentane, Differenzspannungsschwellwert (DSW) ermittelt,
**dass** die momentanen Spannungswerte (DU) und der erwartete Zeitwert (UE) der Spannung einer Differenzeinheit (DE) zugeführt werden, die einen, insbesondere phasenwinkelabhängigen Differenzspannungswert (DW) ermittelt,
**dass** der momentane Differenzspannungswert (DW) mit dem, insbesondere momentanen, Differenzspannungsschwellwert (DSW) verglichen wird, zur Ermittlung der Initiierung einer Unterbrechung.

**8.** Schutzschaltgerät (SG) nach einem der vorhergehenden Patentansprüche,
**dadurch gekennzeichnet,**
**dass** ein mechanisches Trennkontaktsystem (MK) vorgesehen ist, das stromkreisseitig in Serie zur elektronischen Unterbrechungseinheit (EU) geschaltet ist, so dass eine galvanische Trennung im Niederspannungsstromkreis geschaltet werden kann, dass das mechanische Trennkontaktsystem (MK) mit der Steuerungseinheit (SE) verbunden ist.

**9.** Schutzschaltgerät (SG) nach einem der vorhergehenden Patentansprüche,
**dadurch gekennzeichnet,**
**dass** neben einer Unterbrechung durch die elektronische Unterbrechungseinheit (EU) auch eine galvanische Unterbrechung durch das mechanische Trennkontaktsystem (MK) initiiert wird.

**10.** Schutzschaltgerät (SG) nach einem der vorhergehenden Patentansprüche,
**dadurch gekennzeichnet,**
**dass** ein Stromsensor (SI), zur Ermittlung der Höhe des Stromes des Niederspannungsstromkreises, vorgesehen ist.

**11.** Schutzschaltgerät (SG) nach Patentanspruch 10,
**dadurch gekennzeichnet,**
**dass** bei hochohmiger elektronischer Unterbrechungseinheit (EU) und einem Strom im Niederspannungsstromkreis, der einen ersten Stromschwellwert überschreitet, eine galvanische Trennung initiiert wird.

**12.** Schutzschaltgerät (SG) nach Patentanspruch 10 oder 11, **dadurch gekennzeichnet,**
**dass** die ermittelte Stromhöhe mit einem zweiten Stromschwellwert verglichen wird und bei dessen Überschreitung

eine Unterbrechung des Niederspannungsstromkreises, insbesondere durch das mechanische Trennkontaktsystem (MK), initiiert wird.

13. Schutzschaltgerät (SG) nach Patentanspruch 10, 11 oder 12,
**dadurch gekennzeichnet,**
**dass** bei einer Initiierung einer Unterbrechung des Niederspannungsstromkreises mittels der elektronischen Unterbrechungseinheit (EU) und einem Stromfluss im Niederspannungsstromkreis, der einen dritten Stromschwellwert überschreitet und für eine zweite Zeitspanne anhält, eine Unterbrechung des Niederspannungsstromkreises durch das mechanische Trennkontaktsystem (MK) initiiert wird.

14. Schutzschaltgerät (SG) nach einem der vorhergehenden Patentansprüche,
**dadurch gekennzeichnet,**
**dass** die momentanen Schwellwerte (SWU) pro Phasenwinkel der Spannung des Niederspannungsstromkreises ermittelt werden, insbesondere durch die digitale zweite Teileinheit (SED), die eine digitale Ermittlung der momentanen Schwellwerte (SWU) mit einer Taktfrequenz zwischen 10 kHz und 10 MHz, insbesondere 10 kHz und 1 MHz, spezieller zwischen 10 kHz und 100 kHz, insbesondere ab 18 KHz durchführt.

15. Verfahren zum Schutz eines elektrischen Niederspannungsstromkreis, bei dem:

- die Höhe der Spannung des Niederspannungsstromkreises ermittelt wird, derart das momentane Spannungswerte (DU) vorliegen,
**dadurch gekennzeichnet,**
- **dass** momentanen Schwellwerte (SWU) vorliegen,
- **dass** die momentanen Spannungswerte (DU) mit den momentanen Schwellwerten (SWU) phasenwinkelbezogen derart verglichen werden, dass bei Überschreitung oder Unterschreitung der momentanen Schwellwerte oder
- **dass** aus dem momentanem Schwellwert (SWU) und dem momentanen Spannungswert (DU) ein Differenzspannungswert (DW) gebildet wird, dass der Differenzspannungswert (DW) mit einem Differenzspannungsschwellwert (DSW) verglichen wird und bei dessen Überschreitung oder Unterschreitung
- eine Unterbrechung des Niederspannungsstromkreises initiiert wird, um einen Kurzschlussstrom zu vermeiden.

## Claims

1. Circuit breaker device (SG) for protecting an electrical low-voltage circuit, having:

- a housing having connections (L1, N1, L2, N2) for conductors of the low-voltage AC circuit,
- a voltage sensor (SU) for ascertaining the level of the voltage of the low-voltage circuit such that instantaneous voltage values (DU) are available,
- an electronic interruption unit (EU) that, due to semiconductor-based switching elements, has a high-resistance state of the switching elements for interrupting and a lowresistance state of the switching elements for allowing current to flow in the low-voltage circuit,
- a control unit (SE) that is connected to the voltage sensor (SU) and the electronic interruption unit (EU),

**characterized**

**in that** the circuit breaker device (SG) is designed such that instantaneous threshold values (SWU) are available, that the instantaneous voltage values (DU) are compared with the instantaneous threshold values (SWU) in terms of phase angle such
that, if the instantaneous threshold values (SWU) are exceeded or undershot, or
a differential voltage value (DW) is formed from the instantaneous threshold value (SWU) and the instantaneous voltage value (DU), the differential voltage value (DW) is compared with a differential voltage threshold value (DSW) and, if said threshold value is exceeded or undershot,
an interruption of the low-voltage circuit is initiated in order to avoid a short-circuit current.

2. Circuit breaker device (SG) according to Claim 1, **characterized**
**in that** the instantaneous threshold values (SWU) are adapted on the basis of the amplitude (U) of the voltage of the low-voltage circuit such that there is a high instantaneous threshold value (SWU) in the case of a high amplitude (U) of the voltage and there is a low instantaneous threshold value (SWU) in the case of a low amplitude (U) of the voltage.

3. Circuit breaker device (SG) according to Claim 1 or 2, **characterized**

**in that** the absolute values of the instantaneous voltage values (DU) are compared with the instantaneous threshold values (SWU) in terms of phase angle such
that, if the absolute value of the instantaneous threshold value (SWU) is undershot, or
the differential voltage value (DW) is formed from the instantaneous threshold value (SWU) and the absolute value of the instantaneous voltage value (DU), the differential voltage value (DW) is compared with the differential voltage threshold value (DSW) and, if said threshold value is exceeded, an interruption of the low-voltage circuit is initiated.

4. Circuit breaker device (SG) according to one of the preceding claims, **characterized**
**in that** the exceeding or undershooting must be present for a first time interval in order to initiate an interruption of the low-voltage circuit.

5. Circuit breaker device (SG) according to one of the preceding claims, **characterized**

**in that** the circuit breaker device (SG) is designed such that the control unit has an analogue first subunit (SEA) and a digital second subunit (SED),
that the first subunit (SEA) has a voltage comparator (CU), to which the instantaneous voltage values (DU) from the voltage sensor (SU) and the instantaneous threshold values (SWU) from the second subunit (SED) are supplied, for comparing the instantaneous voltage values (DU) with the instantaneous threshold values (SWU) and initiating an interruption of the low-voltage circuit if said threshold values are exceeded or undershot,
that the instantaneous voltage values (DU) are also supplied to the second subunit (SED) in order to ascertain the instantaneous threshold values (SWU).

6. Circuit breaker device (SG) according to one of the preceding claims, **characterized**

**in that** the circuit breaker device (SG) is designed such that provision is made for a grid synchronization unit (NSE) which, from the supplied instantaneous voltage values (DU):

- outputs an expected temporal value (UE) of the voltage,
- outputs a phase angle ($\varphi(t)$) of the voltage,
- outputs the amplitude (U) of the voltage,

that provision is made for a threshold value unit (SWE), to which the expected temporal value (UE), the phase angle ($\varphi(t)$) and the amplitude (U) of the voltage are supplied and which ascertains the instantaneous threshold values (SWU) therefrom,
that the instantaneous voltage values (DU) are compared with the instantaneous threshold values (SWU) in order to ascertain the initiation of an interruption.

7. Circuit breaker device (SG) according to one of the preceding Claims 1 to 5, **characterized**

**in that** the circuit breaker device (SG) is designed such that provision is made for a grid synchronization unit (NSE) which, from the supplied instantaneous voltage values (DU):

- outputs an expected temporal value (UE) of the voltage,
- outputs a phase angle ($\varphi(t)$) of the voltage,
- outputs the amplitude (U) of the voltage,

that provision is made for a threshold value unit (SWE), to which the phase angle ($\varphi(t)$) and the amplitude (U) of the voltage are supplied and which ascertains differential voltage threshold values (DSW), in particular instantaneous differential voltage threshold values, therefrom,
that the instantaneous voltage values (DU) and the expected temporal value (UE) of the voltage are supplied to a differential unit (DE) which ascertains a differential voltage value (DW), in particular a phase angle-dependent differential voltage value, that the instantaneous differential voltage value (DW) is compared with the differential voltage threshold value (DSW), in particular the instantaneous differential voltage threshold value, in order to ascertain the initiation of an interruption.

8. Circuit breaker device (SG) according to one of the preceding claims, **characterized**

   **in that** provision is made for a mechanical isolating contact system (MK) which is connected in series with the electronic interruption unit (EU) on the circuit side such that galvanic isolation can be provided in the low-voltage circuit,
   **in that** the mechanical isolating contact system (MK) is connected to the control unit (SE).

9. Circuit breaker device (SG) according to one of the preceding claims, **characterized**
   **in that**, in addition to an interruption by the electronic interruption unit (EU), an electrical interruption by the mechanical isolating contact system (MK) is also initiated.

10. Circuit breaker device (SG) according to one of the preceding claims, **characterized**
    **in that** a current sensor (SI) for ascertaining the level of the current of the low-voltage circuit is provided.

11. Circuit breaker device (SG) according to Claim 10, **characterized**
    **in that** galvanic isolation is initiated in the case of a high-resistance electronic interruption unit (EU) and a current in the low-voltage circuit that exceeds a first current threshold value.

12. Circuit breaker device (SG) according to Claim 10 or 11, **characterized**
    **in that** the ascertained current level is compared with a second current threshold value and an interruption of the low-voltage circuit, in particular by the mechanical isolating contact system (MK), is initiated if said threshold value is exceeded.

13. Circuit breaker device (SG) according to Claim 10, 11 or 12, **characterized**
    **in that**, if an interruption of the low-voltage circuit by means of the electronic interruption unit (EU) is initiated and there is a current flow in the low-voltage circuit that exceeds a third current threshold value and persists for a second time interval, an interruption of the low-voltage circuit by the mechanical isolating contact system (MK) is initiated.

14. Circuit breaker device (SG) according to one of the preceding claims, **characterized**
    **in that** the instantaneous threshold values (SWU) are ascertained for each phase angle of the voltage of the low-voltage circuit, in particular by means of the digital second subunit (SED) which digitally ascertains the instantaneous threshold values (SWU) at a clock frequency of between 10 kHz and 10 MHz, in particular 10 kHz and 1 MHz, more specifically between 10 kHz and 100 kHz, in particular above 18 kHz.

15. Method for protecting an electrical low-voltage circuit, in which:

    - the level of the voltage of the low-voltage circuit is ascertained such that instantaneous voltage values (DU) are available,
    **characterized**
    - **in that** instantaneous threshold values (SWU) are available,
    - **in that** the instantaneous voltage values (DU) are compared with the instantaneous threshold values (SWU) in terms of phase angle such that, if the instantaneous threshold values are exceeded or undershot, or
    - a differential voltage value (DW) is formed from the instantaneous threshold value (SWU) and the instantaneous voltage value (DU), the differential voltage value (DW) is compared with a differential voltage threshold value (DSW) and, if said threshold value is exceeded or undershot,
    - an interruption of the low-voltage circuit is initiated in order to avoid a short-circuit current.

**Revendications**

1. Dispositif de disjoncteur (SG) pour la protection d'un circuit électrique à basse tension comprenant :

   - un boîtier avec des connexions (L1, N1, L2, N2) pour les conducteurs du circuit à courant alternatif à basse tension,
   - un capteur de tension (SU) pour déterminer la tension du circuit à basse tension de sorte à obtenir les valeurs de tension instantanées (DU),
   - une unité d'interruption électronique (EU) qui, grâce à des éléments de commutation à semi-conducteurs, présente un état à haute impédance des éléments de commutation pour l'interruption et un état à faible impédance des éléments de commutation pour le passage du courant dans le circuit à basse tension,
   - une unité de commande (SE) reliée au capteur de tension (SU) et à l'unité d'interruption électronique (EU),

   **caractérisé en ce que**

   le dispositif de disjoncteur (SG) est conçu de telle sorte que des valeurs seuils instantanées (SWU) sont disponibles,
   les valeurs de tension instantanées (DU) sont comparées aux valeurs seuils instantanées (SWU) en fonction de l'angle de phase, de telle sorte que
   en cas de dépassement ou de sous-dépassement des valeurs seuils actuelles (SWU) ou
   une valeur de tension différentielle (DW) est formée à partir de la valeur seuil instantanée (SWU) et de la valeur de tension instantanée (DU), la valeur de tension différentielle (DW) est comparée à une valeur seuil de tension différentielle (DSW) et en cas de dépassement ou de sous-dépassement de celle-ci,
   une interruption du circuit à basse tension est déclenchée afin d'éviter un courant de court-circuit.

2. Dispositif de disjoncteur (SG) selon la revendication 1,
   **caractérisé en ce que**
   les valeurs seuils instantanées (SWU) sont adaptées en fonction de l'amplitude (U) de la tension du circuit à basse tension, de sorte qu'une amplitude (U) élevée de la tension entraîne une valeur seuil instantanée (SWU) élevée et qu'une amplitude (U) faible de la tension entraîne une valeur seuil instantanée (SWU) faible.

3. Dispositif de disjoncteur (SG) selon la revendication 1 ou 2,
   **caractérisé en ce que**

   les valeurs de tension instantanées (DU) sont comparées aux valeurs seuils instantanées (SWU) en fonction de l'angle de phase, de telle sorte que,
   lorsque la valeur seuil instantanée (SWU) n'est pas atteinte ou que la valeur de tension différentielle (DW) est formée à partir de la valeur seuil instantanée (SWU) et de la valeur de tension instantanée (DU), que la valeur de tension différentielle (DW) est comparée à la valeur seuil de tension différentielle (DSW) et que, en cas de dépassement de celle-ci, une interruption du circuit à basse tension est déclenchée.

4. Dispositif de disjoncteur (SG) selon l'une des revendications précédentes,
   **caractérisé en ce que**
   le dépassement ou le sous-dépassement doit être présent pendant une première période afin de déclencher une interruption du circuit à basse tension.

5. Dispositif de disjoncteur (SG) selon l'une des revendications précédentes,
   **caractérisé en ce que**

   le dispositif de disjoncteur (SG) est conçu de telle sorte que l'unité de commande comporte une première sous-unité analogique (SEA) et une deuxième sous-unité numérique (SED),
   la première sous-unité (SEA) comporte un comparateur de tension (CU) auquel sont transmises les valeurs de tension instantanées (DU) du capteur de tension (SU) et les valeurs seuils instantanées (SWU) sont transmises par la deuxième sous-unité (SED) afin de comparer les valeurs de tension instantanées (DU) avec les valeurs seuils instantanées (SWU) et de déclencher une interruption du circuit à basse tension en cas de dépassement ou de sous-dépassement,
   les valeurs de tension instantanées (DU) sont également transmises à la deuxième sous-unité (SED) afin de déterminer les valeurs seuils instantanées (SWU).

6. Dispositif de disjoncteur (SG) selon l'une des revendications précédentes,
**caractérisé en ce que**

le dispositif de disjoncteur (SG) est conçu de telle sorte qu'une unité de synchronisation du réseau (NSE) est prévue, laquelle, à partir des valeurs de tension instantanées (DU) fournies :

- donne une valeur instantanée (UE) attendue de la tension,
- donne un angle de phase ($\varphi$ (t)) de la tension,
- donne l'amplitude (U) de la tension,

une unité de valeur seuil (SWE) est prévue, à laquelle sont transmis la valeur instantanée (UE) attendue, l'angle de phase ($\varphi$ (t)) et l'amplitude (U) de la tension, et qui détermine à partir de ces valeurs les valeurs seuils instantanées (SWU), les valeurs de tension instantanées (DU) sont comparées aux valeurs seuils instantanées (SWU) afin de déterminer le déclenchement d'une interruption.

7. Dispositif de disjoncteur (SG) selon l'une des revendications 1 à 5 précédentes,
**caractérisé en ce que**

le dispositif de disjoncteur (SG) est conçu de telle sorte qu'une unité de synchronisation du réseau (NSE) est prévue, laquelle, à partir des valeurs de tension instantanées (DU) fournies :

- donne une valeur instantanée (UE) attendue de la tension,
- donne un angle de phase ($\varphi$ (t)) de la tension,
- donne l'amplitude (U) de la tension,

une unité de valeur seuil (SWE) est prévue, à laquelle sont transmis l'angle de phase ($\varphi$ (t)) et l'amplitude (U) de la tension et qui détermine à partir de ceux-ci la valeur seuil de tension différentielle (DSW), en particulier instantanée,
les valeurs de tension instantanées (DU) et la valeur instantanée (UE) attendue de la tension sont transmises à une unité différentielle (DE) qui détermine une valeur de tension différentielle (DW), en particulier dépendante de l'angle de phase,
la valeur de tension différentielle instantanée (DW) est comparée à la valeur seuil de tension différentielle (DSW), en particulier instantanée, afin de déterminer le déclenchement d'une interruption.

8. Dispositif de disjoncteur (SG) selon l'une des revendications précédentes,

**caractérisé en ce qu'**un système mécanique de contact de coupure (MK) est prévu, lequel est connecté en série côté circuit à l'unité d'interruption électronique (EU), de sorte qu'une séparation galvanique peut être commutée dans le circuit à basse tension,
le système mécanique de contact de coupure (MK) est relié à l'unité de commande (SE).

9. Dispositif de disjoncteur (SG) selon l'une des revendications précédentes,
**caractérisé en ce que**
en plus d'une interruption par l'unité d'interruption électronique (EU), une interruption galvanique est déclenchée par le système mécanique de contact de coupure (MK).

10. Dispositif de disjoncteur (SG) selon l'une des revendications précédentes,
**caractérisé en ce que**
un capteur de courant (SI) est prévu pour déterminer l'intensité du courant du circuit à basse tension.

11. Dispositif de disjoncteur (SG) selon la revendication 10, **caractérisé en ce que**
une isolation galvanique est déclenchée en présence d'une unité d'interruption électronique (EU) à haute impédance et d'un courant dans le circuit à basse tension dépassant une première valeur seuil de courant.

12. Dispositif de disjoncteur (SG) selon la revendication 10 ou 11,
**caractérisé en ce que**
l'intensité de courant mesurée est comparée à une deuxième valeur seuil de courant et, en cas de dépassement de celle-ci, une interruption du circuit à basse tension est déclenchée, en particulier par le système mécanique de contact de coupure (MK).

13. Dispositif de disjoncteur (SG) selon la revendication 10, 11 ou 12,
    **caractérisé en ce que**
    en cas de déclenchement d'une interruption du circuit à basse tension au moyen de l'unité d'interruption électronique (EU) et d'un flux de courant dans le circuit à basse tension qui dépasse une troisième valeur seuil de courant et persiste pendant un deuxième intervalle de temps, une interruption du circuit à basse tension est déclenchée par le système mécanique de contact de coupure (MK).

14. Dispositif de disjoncteur (SG) selon l'une des revendications précédentes,
    **caractérisé en ce que**
    les valeurs seuils instantanées (SWU) sont déterminées pour chaque angle de phase de la tension du circuit à basse tension, en particulier par la deuxième sous-unité numérique (SED), qui effectue une détermination numérique des valeurs seuils instantanées (SWU) avec une fréquence d'horloge comprise entre 10 kHz et 10 MHz, en particulier entre 10 kHz et 1 MHz, en particulier entre 10 kHz et 100 kHz, en particulier à partir de 18 kHz.

15. Procédé de protection d'un circuit électrique à basse tension, dans lequel :

    - la tension du circuit à basse tension est déterminée de sorte à obtenir les valeurs de tension instantanées (DU),
    **caractérisé en ce que**
    - des valeurs seuils instantanées (SWU) sont disponibles,
    - les valeurs de tension instantanées (DU) sont comparées aux valeurs seuils instantanées (SWU) en fonction de l'angle de phase, de telle sorte que
    - en cas de dépassement ou de sous-dépassement des valeurs seuils instantanées
    ou qu'une valeur de tension différentielle (DW) est formée à partir de la valeur seuil instantanée (SWU) et de la valeur de tension instantanée (DU), que la valeur de tension différentielle (DW) est comparée à une valeur seuil de tension différentielle (DSW) et, en cas de dépassement ou de sous-dépassement de celle-ci,
    - une interruption du circuit à basse tension est déclenchée afin d'éviter un courant de court-circuit.

FIG 1

# FIG 2

FIG 3

SEDE

SWE

φ(t)   U   UE

DU

NSE

SEAE

SWU

CU   TRIP

FIG 4

SWE

φ(t)   U

DU

NSE

SWU/DSW

DE

UE

DW

CU   TRIP

FIG 5

EP 4 238 199 B1

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0416569 A2
- WO 2015028634 A1
- WO 2014084980 A1